**Europäisches Patentamt**

(19) **European Patent Office**

**Office européen des brevets**

(11) Numéro de publication: **0 049 722**
**B1**

(12) **FASCICULE DE BREVET EUROPEEN**

(45) Date de publication du fascicule du brevet:
**29.10.86**

(21) Numéro de dépôt: **80401443.9**

(22) Date de dépôt: **09.10.80**

(51) Int. Cl.⁴: **G 01 S 17/88**, G 05 D 1/03

(54) **Dispositif indicateur de changement de trajectoire.**

(43) Date de publication de la demande:
**21.04.82 Bulletin 82/16**

(45) Mention de la délivrance du brevet:
**29.10.86 Bulletin 86/44**

(84) Etats contractants désignés:
**BE DE FR GB IT SE**

(56) Documents cités:
**DE - A - 2 504 112**
**FR - A - 2 406 245**
**US - A - 2 424 288**
**US - A - 3 708 668**

(73) Titulaire: **Fricot, Claude, 60, Hameau des peupliers,
F-91770 St. Vrain (FR)**

(72) Inventeur: **Fricot, Claude, 60, Hameau des peupliers,
F-91770 St. Vrain (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne, d'une manière générale, un système indicateur de changement de trajectoire d'un véhicule; elle a plus particulièrement trait à un système signalant par voie sonore et éventuellement lumineuse, au conducteur d'un véhicule, qu'il doit redresser la trajectoire de ce véhicule pour le maintenir en dehors d'au moins une limite du trajet qu'il doit suivre, cette limite étant matérialisée, par exemple, par une bande de revêtement de teinte plus claire que le revêtement de la route s'il s'agit d'un véhicule routier.

On connaît nombre de dispositifs s'apparentant plus ou moins au système conforme à l'invention. Ce sont généralement des dispositifs de guidage utilisés, soit pour la construction de routes, (voir par exemple les documents FR-A-1 464 063 et FR-A-1 591 195 ou les brevets US-A-2 520 680 et US-A-3 298 352), soit pour le guidage entièrement automatique de véhicules (voir par exemple les brevets US-A-2 570 583, US-A-3 229 660 et le document FR-A-2 357 946), et faisant appel, pour certains de ces derniers brevets, à un marquage particulier du réseau routier, éventuellement par un produit radioactif.

D'une manière générale, les systèmes connus de guidage automatique utilisent des moyens récepteurs d'ondes électromagnétiques montés à bord du véhicule, éventuellement des moyens générateurs d'ondes électromagnétiques généralement montés à bord du véhicule, et des moyens matérialisant le trajet que doit suivre ce véhicule.

Le document FR-A-2 271 611 décrit, par exemple, un système de guidage automatique à générateur(s) optique(s) utilisant obligatoirement des répondeurs réflecteurs ou catadioptres pour matérialiser une voie de communication. L'intensité varie selon une loi gaussienne dans le faisceau optique émis, en fonction de la coordonnée Z perpendiculaire à l'axe de la voie. Selon la position occupée par le véhicule sur la coordonnée Z, les signaux reçus ont une amplitude plus ou moins élevée.

Le système de guidage automatique décrit dans le brevet US-A-2 424 288 est à deux générateurs de lumière utilisant obligatoirement une bande de guidage centrale pour matérialiser la voie. Tout déséquilibre entre les signaux réfléchis sur deux cellules réceptrices par la bande entraîne le redressement automatique du véhicule.

Dans le brevet US-A-2 074 251, on décrit un système de guidage automatique à une seule source émettrice utilisant obligatoirement une bande de guidage parfaitement nette pour réfléchir la lumière qu'elle reçoit vers l'un ou l'autre de deux groupes droit ou gauche de cellules selon la position du véhicule par rapport à la bande, et redresser en conséquence de véhicule.

Dans le brevet GB-A-1 241 722, on décrit un système de mise en place de camions en des emplacements de chargement prédéterminés, utilisant des bandes cataphotes au sol en nombre et positions prédéterminés, et un double système de comptage à deux détecteurs.

Dans le brevet US-A-3 708 688, on décrit un système de guidage automatique à deux groupes de mêmes cellules photodétectrices en même nombre, l'un orienté très précisément pour intercepter une bande de voie coupant perpendiculairement la bande interrompue matérialisant la route, avec la cellule centrale dirigée sur cette bande, l'autre uniquement de compensation pour tenir compte des modifications de réflectivité de la route.

On trouve également dans le document FR-A-2 406 245 la description d'un système de correction de changement de trajectoire d'un véhicule par rapport à une voie de déplacement, l'axe central de cette voie étant matérialisé par une bande réfléchissante centrale. Deux groupes émetteur-récepteur sont placés sur le véhicule transversalement à l'axe de la voie, et fournissent des signaux de tension de sortie de signe opposé. La distance qui sépare les deux groupes et la largeur des faisceaux d'émission-réception sont déterminés par rapport à la largeur de la bande réfléchissante pour obtenir un signal d'asservissement lorsque l'axe du détecteur que constituent les deux groupes ne coïncide pas avec l'axe de la voie réfléchissante.

Enfin, dans le brevet US-A-3 172 496, il s'agit d'un système de guidage automatique utilisant des moyens de guidage qui peuvent être les deux bandes jalonnant la voie, et une lentille de formation d'une image de la route; derrière tourne un dispositif d'exploration associé à des dispositifs photo-électriques.

Les systèmes que l'on vient d'évoquer sont relativement complexes et il est très important de remarquer qu'ils utilisent tous, à titre d'élément actif en permanence, une ou des bandes matérialisant la voie, ce qui nécessite, pour la plupart d'entre eux, une orientation très précise des dispositifs détecteurs et éventuellement émetteurs, et, pour le système décrit dans le brevet US-A-3 172 496, une exploration permanente d'une image complète de la route.

On peut donc dire en résumé que les systèmes connus considérés dans leur ensemble présentent les inconvénients suivants:
- ils peuvent exiger la modification du réseau routier existant,
- ils peuvent utiliser des produits émettant des radiations ionisantes dangereuses,
- le fonctionnement de leurs circuits peut être brouillé par des interférences provoquées par des ondes en provenance d'autres sources (flaque d'eau par exemple),
- comme on l'a dit précédemment, ils utilisent, à titre d'élément actif en permanence, une ou des bandes matérialisant la voie,
- ayant pour objectif un guidage entièrement automatique du véhicule, ils doivent être parfaitement fiables en dépit de la complexité des circuits,
- étant relativement complexes, ils sont d'un prix de revient élevé.

L'invention a pour objectif la réalisation d'un système indicateur de changement de trajectoire d'un véhicule qui n'exige pas la modification du réseau routier existant, qui n'utilise pas de produits émettant des radiations ionisantes dangereuses, dont le fonctionnement est fiable même en présence de différences de teinte dans le revêtement routier, ce dispositif étant simple et, par suite, d'un prix de revient modeste.

Pour réaliser l'objectif mentionné ci-dessus, l'invention propose un système indicateur de changement de trajectoire, notamment d'un véhicule, par rapport à une voie de déplacement, comportant deux ensembles émetteur-détecteur d'ondes électromagnétiques fixés sur le véhicule à distance l'un de l'autre, sur un axe transversal à l'axe de la voie définissant la trajectoire, cette voie étant matérialisée par un revêtement contrastant avec les parties latérales qui la bordent, l'une au moins de ces parties pouvant être une bande réflectrice des ondes électromagnétiques précitées, et les deux détecteurs des ensembles étant couplés à des moyens de comparaison dont le signal de sortie est nul lorsque le véhicule circule correctement entre les parties latérales bordant la voie, caractérisé en ce qu'il comporte un générateur couplé aux émetteurs des ensembles, et conçu pour que les ondes électromagnétiques soient émises et détectées sous forme d'impulsions successives de signaux alternatifs, ces impulsions ayant une fréquence, une amplitude et une durée déterminées, en ce que les deux détecteurs sont couplés aux moyens de comparaison par l'intermédiaire, respectivement de deux redresseurs dont l'un laisse passer les alternances négatives des signaux et l'autre, les alternances positives, chaque détecteur étant en série avec, entre autres, un déclencheur réglé pour ne transmettre un signal aux moyens de comparaison qu'au terme d'un certain nombre d'impulsions reçues et en ce que des moyens d'avertissement lumineux et sonores sont associés auxdits moyens de comparaison, lesdits moyens d'avertissement étant rendus actifs lorsque, le véhicule déviant de sa trajectoire, l'un desdits ensembles émetteur-détecteur intercepte la ou une bande latérale bordant la voie.

La suite de la description se réfère aux dessins annexés qui représentent:

– figure 1, une vue schématique en plan d'un véhicule équipé du système conforme à l'invention.

– figures 2A et 2B, à titre d'exemple, une illustration schématique des ensembles émetteur-détecteur portés par le véhicule, lorsque la trajectoire de ce dernier est correcte (figure 2A), lorsque cette trajectoire est déviée (figure 2B),

– figure 3, un schéma des circuits du dispositif, associés aux ensembles émetteur-détecteur,

– figure 4, le schéma du circuit d'utilisation 20 de la figure 3.

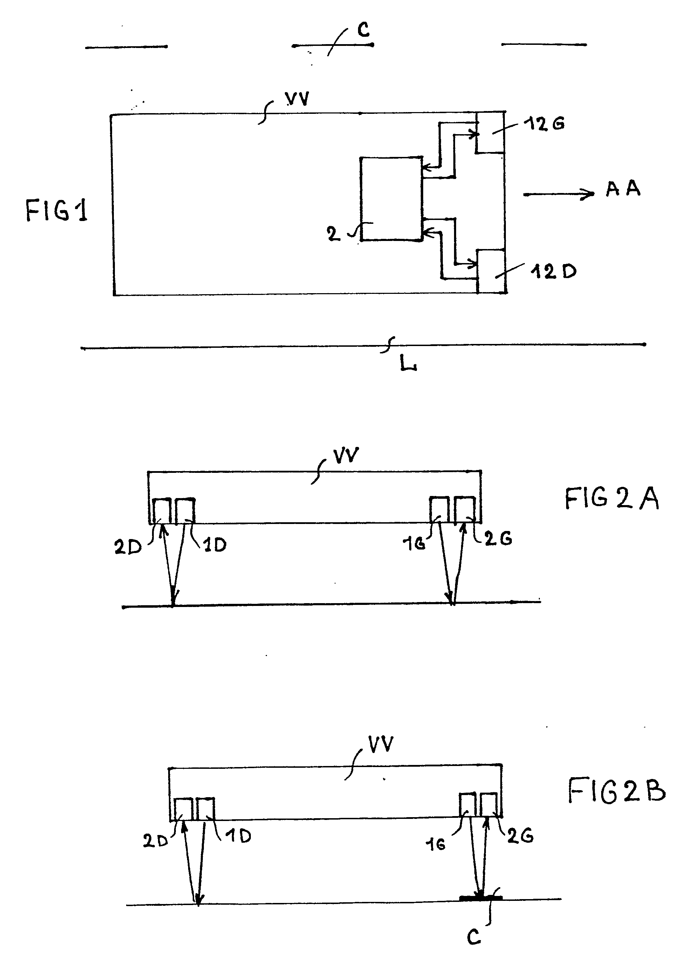

On a représenté très schématiquement figure 1 un véhicule VV circulant dans le sens de la flèche AA. On supposera que ce véhicule est un véhicule routier, la voie qu'il doit suivre étant limitée par une bande centrale interrompue C, à sa gauche dans l'exemple représenté, et éventuellement par une bande latérale L à sa droite.

A l'avant de ce véhicule, par exemple sous le pare-choc avant, sont fixés deux ensembles, 12G à gauche et 12D à droite, chacun des ces ensembles se composant d'un émetteur et d'un détecteur d'ondes électromagnétiques contenues dans le spectre infrarouge. A bord du véhicule, devant le conducteur, est placé le dispositif 2 qui est relié aux émetteurs et aux détecteurs des ensembles 12G et 12D et qui contient les circuits électroniques du système.

On a illustré, également très schématiquement, figures 2A et 2B, le véhicule VV avec les ensembles précédemment cités et montés aux angles extérieurs, avant gauche et avant droit, du véhicule, ces ensembles comportant respectivement un émetteur (1G, 1D) et un détecteur (2G, 2D), et le véhicule illustré figure 2B franchissant la bande centrale interrompue C qui limite un côté de la voie. Les axes des émetteurs et des détecteurs sont dirigés perpendiculairement sur le sol.

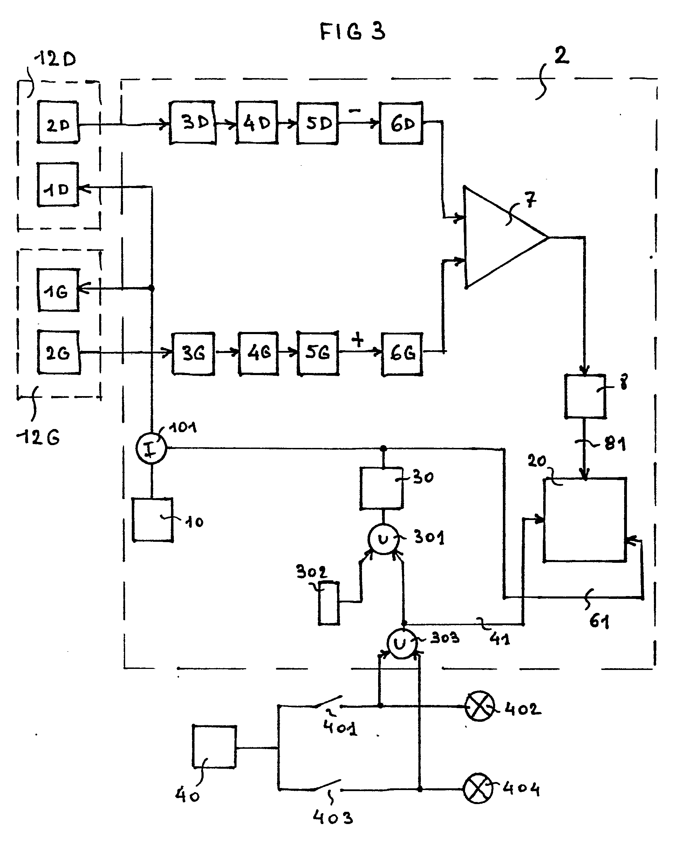

On a également illustré figure 3 les ensembles 12G et 12D, le premier comportant l'émetteur 1G et le détecteur 2G, et le second, l'émetteur 1D et le détecteur 2D. Les deux émetteurs sont commandés en parallèle par un générateur d'impulsions 10, les impulsions fournies par ce générateur leur étant transmises par l'intermédiaire d'une porte de blocage 101 dont le rôle sera défini ci-après. Lorsque la porte 101 n'est pas bloquée, les émetteurs émettent donc des radiations infrarouges sous forme d'impulsions dont la fréquence, de l'ordre de 2 à 10 kHz, l'amplitude et la durée, de l'ordre de 15 µs, sont définies par le réglage du générateur 10.

Lorsque le véhicule circule correctement, comme illustré figure 2A, les radiations réfléchies par le revêtement routier sont sensiblement de même amplitude. Par contre, lorsque le véhicule franchit la bande centrale interrompue, comme illustré figure 2B, les radiations réfléchies sur le détecteur 2G sont de plus grande amplitude que celles réfléchies sur le détecteur 2D. On remarquera à ce propos qu'il suffit que l'un des détecteurs «voit», pendant un temps suffisamment long comme on le verra par la suite, une bande de teinte suffisamment contrastée ou différente quant à sa nature par rapport au revêtement routier, pour que le système devienne actif. Ce système peut donc être utilisé même sur les routes ne comportant pas de bandes de signalisation latérales, et fonctionne même lorsque le véhicule franchit une bande d'herbe jalonnant la route et qui se trouve à distance différente des détecteurs par rapport au revêtement routier.

On se reportera maintenant à la figure 3 pour décrire les circuits associés au système et contenus dans le dispositif 2.

Les détecteurs 2G et 2D sont respectivement raccordés en sortie aux filtres 3G et 3D, ces filtres étant accordés pour ne laisser passer que les signaux impulsionnels émis par les émetteurs. Les filtres 3G et 3D sont eux-mêmes raccordés aux redresseurs 5G et 5D par l'intermédiaire de préamplificateurs 4G et 4D, respectivement. L'un des redresseurs précités, en l'occurence le redresseur 5G, ne laisse passer que les alternances positives du signal infrarouge impulsionnel; l'autre redresseur, en l'occurence le redresseur 5D, ne laisse passer que les alternances négatives du signal infrarouge impulsionnel. On obtient donc en sortie des redresseurs 5G et 5D des signaux de polarité positive et négative respectivement, dont les amplitudes sont sensiblement de même valeur lorsque le véhicule circule correctement.

Les signaux issus des redresseurs 5G et 5D sont transférés sur les entrées d'un circuit de comparaison 7, par l'intermédiaire des déclencheurs 6G et 6D respectivement. Le rôle de ces déclencheurs, qui peuvent être constitués simplement par une résistance série et un condensateur parallèle, est de ne laisser passer les signaux qu'au terme d'un certain nombre d'impulsions, ce qui évite le fonctionnement intempestif du système lorsque l'un des détecteurs «voit» des surfaces plus claires pendant un temps relativement court, par exemple lorsque le véhicule passe sur des débris de verre, des flaques d'eau, etc...

Le circuit de comparaison 7 est conçu de telle sorte qu'il fournit un signal de polarité positive lorsque le détecteur 2G intercepte une bande plus claire que le revêtement routier, et un signal de polarité négative lorsque le détecteur 2D intercepte une bande plus claire que le revêtement routier. Le signal de sortie du circuit de comparaison est bien entendu nul lorsque le véhicule circule correctement.

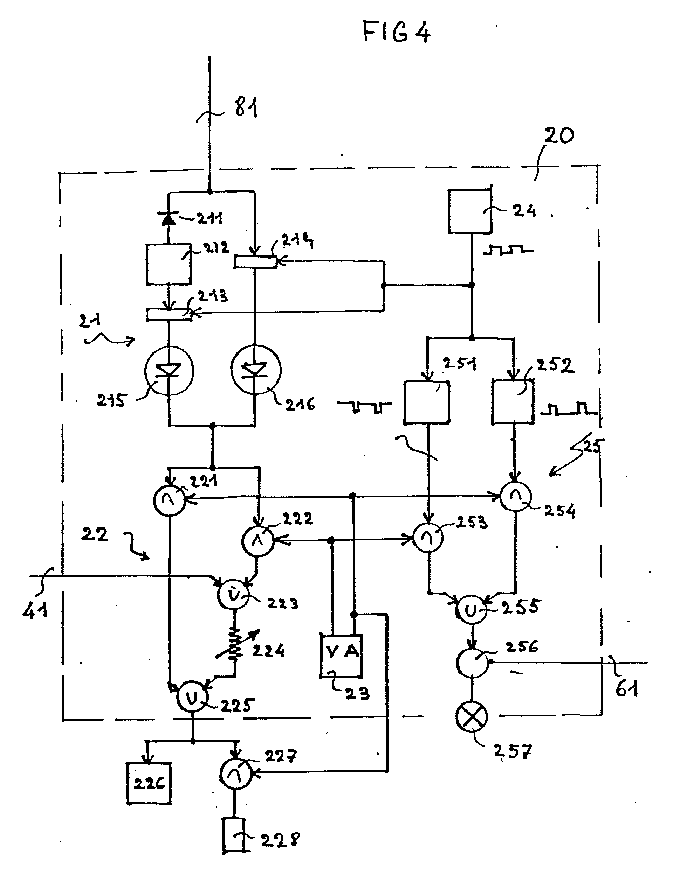

Le circuit de comparaison 7 est couplé en sortie à un circuit de maintien 8. On doit tenir compte en effet de la largeur relativement faible des bandes claires appliquées sur le revêtement routier et de la vitesse variable d'un véhicule qui font que le fonctionnement des détecteurs est de plus ou moins longue durée. Le circuit de maintien 8 permet d'obtenir un signal de polarité positive ou de polarité négative, mais dont la durée est fixe et peut être réglable. Ce signal 81 est transféré à l'entrée d'un circuit d'utilisation 20 qui comporte les moyens d'avertissement visuels et sonores précédemment mentionnés, et qui est représenté en détails figure 4.

On a dit précédemment que le générateur d'impulsions 10 est associé à une porte de blocage 101. Cette porte a pour rôle d'interdire le fonctionnement des émetteurs, et donc du système, dans certaines conditions.

On a représenté figure 3 la centrale clignotante 40 du véhicule, avec les contacteurs de clignotant 401 et 403 et les feux clignotants 402 et 404. Lorsque le conducteur, parce qu'il doit tourner ou dépasser le véhicule qui le précède, met en marche l'un ou l'autre des feux clignotants 402 ou 404 en manœuvrant l'un ou l'autre des contacteurs 401 ou 403, les signaux de la centrale clignotante sont transférés à l'entrée d'un circuit de maintien 30 par l'intermédiaire des portes OU 303 et 301, ce circuit de maintien les transformant en signal de durée fixe utilisé pour bloquer la porte 101 associée au générateur d'impulsions 10. On notera que les signaux issus de la centrale clignotante sont également transférés au circuit d'utilisation 20 par l'intermédiaire du conducteur 41.

On a représenté figure 3 un contacteur 302 qui est un contacteur manuel du type bouton-poussoir par exemple. Le contacteur 302 est utilisé pour arrêter temporairement le système lorsque le véhicule, circulant correctement, doit franchir certaines marques de signalisation au sol (flèches, etc...). Le conducteur manœuvre alors ce contacteur, ce qui se traduit par l'envoi d'une impulsion à l'entrée du circuit de maintien 30, par l'intermédiaire de la porte OU 301, ce circuit de maintien transformant cette impulsion en signal de durée fixe qui vient bloquer la porte 101 associée au générateur d'impulsions 10. On notera que le signal en sortie du circuit 30 est transféré au circuit d'utilisation 20 par l'intermédiaire du conducteur 61.

Le circuit d'utilisation 20 est représenté figure 4. Comme on l'a dit précédemment, il reçoit en 81 un signal de polarité positive ou un signal de polarité négative, ces signaux étant de durée fixe, lorsque le détecteur 2G ou le détecteur 2D intercepte une bande plus claire que le revêtement routier. On notera que la durée des signaux précités n'est fixe que s'il y a franchissement temporaire d'une bande claire. Bien entendu, si le véhicule circule en permanence de telle sorte que l'un des détecteurs «voit» en permanence une bande claire, les signaux considérés seront fournis en permanence au circuit d'utilisation.

Le signal reçu en 81 est transféré à l'entrée d'un circuit d'indicateurs lumineux 21 qui constitue les moyens d'avertissement lumineux du système. Le circuit 21 comporte deux branches en parallèle. L'une des branches comporte en série un transistor de modulation 214 et une diode émettrice de lumière 216. L'autre branche comporte en série une diode en polarisation inverse 211, un inverseur de polarité 212, un transistor de modulation 213 et une diode émettrice de lumière 215. La première branche est passante pour les signaux de polarité positive et la seconde branche est passante pour les signaux de polarité négative, le rôle de la diode 211 étant de bloquer les signaux de polarité positive et la polarité des signaux qu'elle transmet étant inversée dans l'inverseur 212. On a donc à l'entrée de la diode émettrice de lumière 215 ou 216, dans le cas où le détecteur droit 2D ou le détecteur gauche 2G intercepte une bande claire, un signal de polarité positive qui est modulé à la fréquence des signaux fournis par le générateur 24, lequel est couplé aux transistors de modulation 213 et 214. La diode émettrice de lumière 215 clignotera donc si le détecteur de droite 2D intercepte une bande claire, et la diode émettrice de lumière 216 clignotera si le détecteur de gauche 2G intercepte une bande claire. Le conducteur est ainsi informé visuellement du sens dans lequel il doit opérer le redressement de la trajectoire du véhicule.

Le circuit d'utilisation 20 comporte également un circuit d'indicateur sonore 22 qui constitue les moyens d'avertissement sonores du système. Le circuit 22 comporte également deux branches en parallèle. L'une des branches comporte la porte ET 221; elle est passante pour les signaux issus du circuit d'indicateurs lumineux 21 lorsqu'un commutateur manuel 23 est placé sur la position «alarme» A par le conducteur. Lorsque l'un ou l'autre des détecteurs 2G et 2D intercepte une bande claire, le signal en sortie du circuit d'indicateurs lumineux 21 est donc transféré, si le commutateur 23 est en position «alarme», sans atténuation au module son 226, par l'intermédiaire de la porte ET alors passante et de la porte OU 225. Le signal précité est, toujours dans le cas où le commutateur 23 est en position «alarme», transféré également au relais 228 par l'intermédiaire de la porte ET 227 alors passante. Les contacts de ce relais peuvent être utilisés au gré du conducteur pour la commande d'avertisseurs supplémentaires sonores ou lumineux, par exemple.

Le commutateur 23 comporte une deuxième position V ou position de veille qui permet à un conducteur ne risquant pas la somnolence de contrôler le fonctionnement du système sans pour autant être gêné par les signaux émis par l'intermédiaire du module son 226. Lorsque le commutateur 23 est sur la position «veille», la porte ET 222 est passante, et les signaux issus du circuit d'indicateurs lumineux 21 sont transférés au module son 226, par l'intermédiaire de cette porte ET 222, de la porte OU 223, du potentiomètre 224 et de la porte OU 225, le potentiomètre 224 permettant de régler l'intensité des signaux émis par l'intermédiaire du module son 226.

On remarquera que la porte OU 223 reçoit, par l'intermédiaire du conducteur 41, les signaux issus de la centrale clignotante du véhicule (40, figure 3), lorsque le conducteur met en marche l'un ou l'autre des feux clignotants de ce véhicule. On a donc mis à profit dans ce système la présence d'un circuit d'indicateur sonore pour donner au conducteur du véhicule une indication sonore de la mise en marche de l'un ou l'autre des feux clignotants.

Comme on l'a dit précédemment, le circuit d'utilisation 20 comporte un générateur 24 de signaux de modulation, la fréquence de ces derniers étant de l'ordre de 3 Hz. La présence de ce générateur de signaux de modulation est mise à profit dans ce système pour commander un circuit 25 de contrôle visuel de fonctionnement. Le circuit 25 comporte deux branches. La première branche se compose d'un convertisseur d'impulsions 251 et d'une porte ET 253 qui est passante lorsque le commutateur 23 est sur la position «veille» V. La deuxième branche se compose d'un convertisseur d'impulsions 252 et d'une porte ET 254 qui est passante lorsque le commutateur 23 est dans la position «alarme» A. Les signaux issus du générateur de signaux de modulation 24 sont donc transférés au témoin lumineux 257, par l'intermédiaire de la porte OU 255, de la porte de blocage 256 (les conditions de son blocage sont définies ci-après), et de l'une ou l'autre des branches 251–253 et 252–254.

Comme on l'a illustré figure 4, le convertisseur 251 transforme les impulsions rectangulaires à ondes positives et négatives de même durée, qui sont issues du générateur 24, en impulsions à ondes positives longues et ondes négatives courtes. Donc, lorsque le commutateur 23 sera sur la position «veille», le témoin lumineux 257 sera alimenté de telle sorte qu'il clignotera, mais avec des temps d'extinction extrêmement courts. Par contre, le convertisseur 252 transforme les impulsions issues du générateur 24 en impulsions à ondes positives courtes et ondes négatives longues. Donc, lorsque le commutateur 23 sera dans la position «alarme», le témoin lumineux 257 sera alimenté de telle sorte qu'il clignotera, mais avec des temps d'extinction extrêmement longs. Le conducteur du véhicule disposera donc d'un moyen de contrôle visuel de fonctionnement pouvant l'informer en permanence de la position dans laquelle se trouve le commutateur 23.

Enfin, on a dit précédemment que le circuit d'utilisation 20 est couplé en sortie du circuit de maintien 30 par l'intermédiaire du conducteur 61 (figure 3). Le signal du circuit de maintien 30 est transféré sur l'entrée de blocage de la porte 256. Donc, lorsque le conducteur du véhicule arrête temporairement le système, ou met en marche l'un des feux clignotants, le fonctionnement du témoin lumineux 257 est temporairement arrêté.

Il est bien entendu que la description qui précède a été faite à titre d'exemple non-limitatif, des variantes pouvant être envisagées dans le cadre de l'invention. C'est ainsi que les ensembles émetteur-détecteur peuvent être disposés, soit transversalement à l'avant du véhicule comme il a été représenté, soit longitudinalement par rapport au véhicule, ou verticalement selon l'application. Le véhicule peut en effet ne pas être un véhicule routier, mais un avion, un bateau, un train, une péniche dans une écluse étroite, sur un parking ou une voie de stationnement, le système impliquant alors un marquage de couleur claire éventuellement codé.

**Revendications**

1. Système indicateur de changement de trajectoire, notamment d'un véhicule (VV), par rapport à une voie de déplacement, comportant deux ensembles émetteur-détecteur d'ondes électromagnétiques fixés sur le véhicule à distance l'un de l'autre, sur un axe transversal à l'axe de la voie définissant la trajectoire, cette voie étant matérialisée par un revêtement contrastant avec les parties latérales qui la bordent, l'une au moins de ces parties pouvant être une bande réflectrice des ondes électromagnétiques précitées, et les deux détecteurs (2D, 2G) des ensembles étant couplés à des moyens de comparaison (7) dont le signal de sortie est nul lorsque le véhicule circule correctement entre les parties latérales bordant la voie, caractérisé en ce qu'il comporte un générateur (10) couplé aux émetteurs (1D, 1G) des ensembles, et conçu pour que les ondes électromagnétiques soient émises et détectées sous forme d'impulsions successives de signaux alternatifs, ces impulsions ayant une fréquence, une amplitude et une durée déterminées, en ce que les deux détecteurs (2D, 2G) sont couplés aux moyens de comparaison (7) par l'intermédiaire, respectivement de deux redresseurs (5D, 5G) dont l'un laisse passer les alternances négatives des signaux et l'autre, les alternances positives, chaque détecteur (5D, ou 5G) étant en série avec, entre autres, un déclencheur (6D ou 6G) réglé pour ne transmettre un signal aux moyens de comparaison qu'au terme d'un certain nombre d'impulsions reçues et en ce que des moyens d'avertissement lumineux (21) et sonores (22) sont associés auxdits moyens de comparaison (7), lesdits moyens d'avertissement étant rendus actifs lorsque, le véhicule (VV) déviant de sa trajectoire, l'un desdits détecteurs (2D, 2G) intercepte la ou une bande latérale bordant la voie.

2. Système selon la revendication 1, caractérisé en ce que chaque détecteur (5D ou 5G) est également monté en série avec un filtre (3D ou 3G) accordé pour ne laisser passer que les impulsions correspondant à celles émises par l'intermédiaire des émetteurs.

3. Système selon revendication 1, caractérisé en ce que les moyens de comparaison (7) fournissent un signal de polarité positive ou de polarité négative selon que l'un ou l'autre des détecteurs (2D, 2G) détecte des ondes électromagnétiques réfléchies par l'une ou l'autre des parties latérales bordant la voie, lesdits moyens d'avertissement lumineux (21) comportent essentiellement deux branches en parallèle couplées en sortie des moyens de comparaison (7), l'une de ces branches étant passante pour les signaux de polarité positive et comportant une diode émettrice de lumière, l'autre branche étant passante pour les signaux de polarité négative et comportant une diode émettrice de lumière précédée d'un inverseur de polarité et d'une diode en polarisation inverse.

4. Système selon la revendication 1, caractérisé en ce que les moyens d'avertissement lumineux du système (21) sont couplés en sortie des moyens de comparaison (7) par l'intermédiaire d'un circuit de maintien (8) qui fournit, à ces moyens d'avertissement lumineux, un signal de polarité négative ou positive selon la polarité du signal qu'il reçoit des moyens de comparaison (7), le signal formé par le circuit de maintien (8) étant de durée fixe et réglable.

5. Système selon la revendication 1, caractérisé en ce que lesdits moyens d'avertissement sonores (22) comportent entre autres un module son (226) et sont couplés à la sortie des moyens de comparaison par l'intermédiaire des moyens d'avertissement lumineux (21).

6. Système selon les revendications 1 et 5, caractérisé en ce qu'il comporte un commutateur manuel (23) à une position alarme (A) et une position veille (V), les moyens d'avertissement sonores (22) comportant deux branches en parallèle, la première branche comporte une porte ET (221) rendue passante pour les signaux de sortie des moyens d'avertissement lumineux (21) sous la dépendance du commutateur (23) en position alarme (A), la seconde branche comportant entre autres un potentiomètre (224) en série avec une porte ET (222) rendue passante pour les signaux de sortie des moyens d'avertissement lumineux (21) sous la dépendance du commutateur (23) en position veille (V).

7. Système selon l'une des revendications précédentes, caractérisé en ce que la seconde branche des moyens d'avertissement sonores du système (22) comporte, en outre, en série, une porte OU (223) passante pour les signaux issus de la centrale clignotante (40) du véhicule (VV), lorsque le conducteur a manœuvré l'un des contacteurs (401, 403) des feux clignotants (402, 404) de ce véhicule.

8. Système selon l'une des revendications précédentes, caractérisé en ce qu'il comporte un générateur de signaux de modulation (24) couplé à au moins un transistor de modulation (213, 214) pour moduler les signaux fournis aux diodes émettrices de lumière (215, 216) et au module son (226).

9. Système selon l'une des revendications précédentes, caractérisé en ce qu'il comporte un circuit de contrôle visuel de fonctionnement (25) constitué par un témoin lumineux (257) qui est couplé au générateur de signaux de modulation (24) par l'intermédiaire entre autres de deux branches en parallèle, l'une de ces branches comportant un convertisseur d'impulsions (251) en série avec une porte ET (253) rendue passante sous la dépendance du commutateur (23) en position veille (V), l'autre branche comportant un convertisseur d'impulsions (252) en série avec une porte ET (254) rendue passante sous la dépendance du commutateur (23) en position alarme (A), les convertisseurs (251, 252) étant réglés pour former, à partir des signaux fournis par le générateur de signaux de modulation (24), des signaux impulsionnels ayant des durées d'impulsion différentes.

10. Système selon les revendications 1 et 3, caractérisé en ce que le générateur d'impulsions (10) est associé à une porte (101) de blocage du signal impulsionnel que ce générateur fournit aux émetteurs (1D, 1G), cette porte étant commandée, par l'intermédiaire d'un circuit de maintien (30) et d'une porte OU (301), d'une part, par un contacteur manuel d'arrêt temporaire du système (302), d'autre part, par la centrale clignotante (40) du véhicule (VV) lorsque le conducteur manœuvre l'un des contacteurs (401, 403) des feux clignotants (402, 404) de ce véhicule.

11. Système selon l'une des revendications précédentes, caractérisé en ce que le témoin lumineux (257) du circuit de contrôle visuel de fonctionnement (25) est couplé, aux deux branches parallèles qui couplent ce témoin lumineux (257) au générateur de signaux de modulation (24), par l'intermédiaire d'une porte de blocage (256) commandée par le circuit de maintien (30), lui-même couplé à la centrale clignotante (40) du véhicule (VV) et au contacteur manuel d'arrêt temporaire du système (302).

12. Système selon l'une des revendications précédentes, caractérisé en ce qu'il comporte un relais (228) dont les contacts sont laissés à la disposition du conducteur du véhicule (VV) et qui est monté en parallèle avec le module son (226), dans un circuit série comportant une porte ET (227) rendue passante sous la dépendance du commutateur manuel (23) en position alarme (A).

## Claims

1. System for indicating a modification of a trajectory, in particular of a vehicle (VV), with respect to a circulation path, which comprises two transmitter-detector units of electromagnetic waves that are fixed on the vehicle, so as to be distant from each other and upon an axis which is transversal with respect to the axis of the path defining the trajectory, said path being materialized by a coating in contrast with the lateral parts bordering the latter, one at least of said parts being possibly a band that reflects the aforesaid electromagnetic waves and the two detectors (2D, 2G) of the units being coupled to comparison means (7) having a zero output signal when the vehicle runs correctly between the lateral bordering parts of the path, characterized by the fact that the system comprises a generator (10) coupled to the transmitters (1D, 1G) of the units and conceived in such manner that the electromagnetic waves be transmitted and detected in the form of successive impulses of alternative signals, these impulses having a determined frequency, amplitude and duration; that the two detectors (2D, 2G) are coupled with the comparison means (7) through the intermediary of two rectifiers (5D, 5G) respectively, while one of them lets the negative alternations of the signal pass through and the other one, its positive alternations, each detector (5D or 5G) being mounted in series with a trigger (6D or 6C) which is adapted to transmit a signal to the comparison means but after a certain number of received impulses; and that luminous (21) and sonorous (22) warning means are adjoined to said comparison means (7), said warning means being made operating when the vehicle (VV) diverging from its trajectory one of said detectors (2D, 2G) intercepts the or one lateral band that borders the path.

2. System according to claim 1, characterized by the fact that each detector (5D or 5G) is also mounted in series with a filter (3D or 3G) that is tuned to let only the impulsions pass through, in correspondance which those emitted through the intermediary of the transmitters.

3. System according to claim 1, characterized by the fact that the comparison means (7) deliver a signal having a positive or negative polarity according as one detector (2D, 2G) or the other detects electromagnetic waves reflected by one or the other of the lateral parts bordering the path; that said luminous warning means (21) essentially comprise two branches in parallel coupled at the outlet of the comparison means (7), one of these branches being open for the signals having a positive polarity and comprising a light-emitting diode, the other branch being open for the signals having a negative polarity and comprising a light-emitting diode which is preceded by a polarity reverser and an inverse polarized diode.

4. System according to claim 1, characterized by the fact that the luminous warning means of the system (21) are coupled at the output of the comparison means (7) through the intermediary of a holding circuit (8) which delivers to these luminous warning means a signal having a negative or positive polarity according to the polarity of the signal received from the comparison means (7), the signal formed by the holding circuit (8) having a fixed, adjustable duration.

5. System according to claim 1, characterized by the fact that said sonorous warning means (22) comprise inter alia a sound emitter (226) and are coupled at the outlet of the comparison means through the intermediary of the luminous warning means (21).

6. System according to claims 1 and 5, characterized by comprising a manual change-over switch (23) having one alarm position (A) and one watching position (V), whereas the sonorous warning means (22) have two branches in parallel, the first one comprising a gate AND (221) made open for the output signals of the luminous warning means (21) under control of the change-over switch (23) in alarm position (A) and the second branch comprising among others a potentiometer (224) in series with a gate AND (22) made open for the output signals of the luminous warning means (21) under control of the change-over switch (23) in watching position (V).

7. System according to one of the preceding claims, characterized by the fact that the second branch of the sonorous warning means of the system (22) comprises in addition, in series, a gate OR (223) open for the signals issued from the winker unit (40) of the vehicle (VV), when the driver has actuated one of the contactors (401, 403) of the winking lights (402, 404) of this vehicle.

8. System according to one of the preceding claims, characterized by the fact that it comprises a generator of modulation signals (24) which is coupled with at least one modulation transistor (213, 214) for modulating the signals applied to the light-emitting diodes (215, 216) and to the sound emitter (226).

9. System according to one of the preceding claims, characterized by the fact that it comprises a visual checking circuit (25) for monitoring its functionning, which consists of a luminous signalling mark (257) which is coupled to the generator of modulation signals (24) through the intermediary inter alia of two branches in parallel, whereas one of the branches comprises an impulse converter (251) in series with a gate AND (253) made open under control of the change-over switch (23) in watching position (V), and the other branch comprises an impulse converter (252) in series with a gate AND (254) rendered open under control of the change-over switch (23) in alarm position (A), the converters (251, 252) being adapted so as to form, from the signals delivered by the generator of the modulation signals (24), impulsional signals having some different durations of impulses.

10. System according to claims 1 and 3, characterized by the fact that the impulse generator (10) is adjoined to a gate (101) for blocking the impulse signal that this generator delivers to the transmitters (1D, 1G), this gate being controlled through the intermediary of a holding circuit (30) and a gate OR (301) on the one hand, and by a manual contactor for temporarily stopping the system (302) on the other hand by means of the flasher unit (40) of the vehicle (VV) when the driver actuates one of the contactors (401, 403) of the winking signal lights (402, 404) of this vehicle.

11. System according to one of the preceding claims, characterized by the fact that the luminous signalling mark (257) of the circuit (25) for visually checking the functioning is coupled to the two parallel branches that couple this luminous mark (257) with the generator (24) of modulation signals, through the intermediary of a blocking gate (256) controlled by the holding circuit (30) which is itself coupled to the winker unit (40) of the vehicle (VV) and to the manual contactor for temporarily stopping the system (302).

12. System according to one of the preceding claims, characterized by comprising a relay (228), the contacts of which are placed at the vehicle (VV) driver's disposal and which is mounted in parallel with the sound emitter (226) in a series circuit which includes a gate AND (227) which is rendered open under control of the manual change-over switch (23) in alarm position (A).

**Patentansprüche**

1. Anzeigesystem für die Änderung einer Bahn, besonders die Bahn eines Fahrzeugs (VV), in bezug auf einer Fahrbahn, das zwei von einander entfernten Sender-Empfänger Kombinationen für elektromagnetische Wellen enthält, die auf dem Fahrzeug sowie auf einer quer zur Achse der die Fahrbahn bestimmende Achse, festgemacht sind, wobei die Fahrbahn durch eine von den seitlichen begrenzenden Teilen kontrastierende Strassendecke materialisiert ist und wobei mindestens ein von diesen Teilen ein die vorgenannten elektromagnetischen Wellen zurückstrahlendes Band sein kann und die zwei Detektoren (2D, 2G) der Kombinationen mit Vergleichsmittel (7) gekuppelt sind, denen Ausgangssignal null ist wenn das Fahrzeug zwischen den seitlichen, die Fahrbahn begrenzenden Teilen richtig fährt, dadurch gekennzeichnet, dass das System ein Generator (10) enthält, der mit den Sendern (1D, 1G) der Kombinationen gekuppelt und errichtet ist, sodass die elektromagnetischen Wellen als aufeinander folgende Impulse abwechselnder Signale gesandt und detektiert sind, wobei diese Impulse eine bestimmte Frequenz, Amplitude und Dauer haben, und dass die zwei Detektoren (2D, 2G) mit den Vergleichsmitteln (7) respektiv durch zwei Gleichrichtern gekuppelt sind, von denen der eine die negativen Wechselteile und der andere die positiven Wechselteile der Signale durchlässt, wobei jeder Detektor (5D oder 5G) mit insbesondere einem Auslöser (6D oder 6G) in Reihenschaltung geschaltet ist, der so eingestellt wird, dass er zu den Vergleichsmitteln nur am Ende einer vorbestimmten Zahl von empfangenen Impulsen ein Signal überführt, und auch dass Licht (21) und Schallwarnmittel (22) an den Vergleichsmitteln (7) angeschlossen sind, wobei die genannten Warnmittel aktiviert werden, wenn einer der genannten Detektoren (2D, 2G) die bzw. ein seitliches, die Fahrbahn begrenzendes Band unterbricht als das Fahrzeug von seiner Bahn abweicht.

2. System nach Anspruch 1, dadurch gekennzeichnet, dass jeder Detektor auch mit einem Filter (3D oder 3G) in Reihenschaltung geschaltet ist, der abgestimmt ist, um nur die Impulse durchzulassen, die den von den Sendern gesandten Impulsen entsprechen.

3. System nach Anspruch 1, dadurch gekennzeichnet, dass die Vergleichsmittel (7) ein Signal liefern, das eine positive oder negative Polarität hat je nachdem der eine oder der andere Detektor (2D oder 2G) elektromagnetische Wellen detektiert, die von dem einen oder dem anderen Teil, der die Bahn seitlich begrenzt, zurückgestrahlt sind, und dass die genannten Lichtwarnmittel (21) wesentlich zwei parallel geschaltete Zweige besitzen, die am Ausgang der Vergleichsmittel gekuppelt sind, wobei ein Zweig für die Signale von positiver Polarität durchlassend ist und eine Lichtemittierende Diode enthält und der andere Zweig für die Signale von negativer Polarität durchlassend ist und eine Licht-emittierende Diode enthält, welche von einem Polwechsler und von einer entgegengesetzt polarisierten Diode vorangeschaltet ist.

4. System nach Anspruch 1, dadurch gekennzeichnet, dass die Lichtwarnmittel (21) des Systems am Ausgang der Vergleichsmittel (7) durch Vermittlung einer Halterung kreis (8) gekuppelt sind, die zu diesen Lichtwarnmittel ein Signal liefern, der eine negative oder positive Polarität hat, der Polarität des vom Vergleichsmittel (7) gelieferten Signals gemäss, wobei das von der Halterung-Schaltung (8) erzeugten Signal eine feste, einstellbare Dauer hat.

5. System nach Anspruch 1, dadurch gekennzeichnet, dass die genannten Schallwarnmittel (22) insbesondere ein Schallzeug (22) enthalten und am Ausgang der Vergleichsmittel durch die Lichtwarnmittel (21) gekuppelt sind.

6. System nach den Ansprüchen 1 und 5, dadurch gekennzeichnet, dass einen Hand-Umschalter (23) enthält, der eine Alarm (A) und eine Wachstellung (V) besitzt, wobei die Schallwarnmittel (22) zwei parallel geschaltete Zweige enthalten, der erste Zweig ein UND Tor (221) enthält, das unter Abhängigkeit des im Alarmstellung (A) gelagerten Umschalters (23) für die Ausgangssignale der Lichtschallmittel durchlassend wird, der zweite Zweig insbesondere ein Potentiometer (224) mit einem UND Tor (222) in Reihenschaltung geschaltet enthält, und dieses UND Tor, unter Abhängigkeit des in Wachstellung (V) gelagerten Umschalters (23), für die Ausgangssignale der Lichtwarnmittel (21) durchlassend wird.

7. System nach einem der vorangehenden Ansprüche, dadurch gekennzeichnet, dass der zweite Zweig der Schallwarnmittel des Systems (22) überdies in Reihenschaltung ein ODER Tor (223) enthält, das für die abstammende von den Blinkgeber (40) des Fahrzeugs (VV) Signale durchlassend wird, wenn der Fahrzeugsführer einen der Einschalter (401, 403), der blinkenden Anzeigelampen (402, 404) des Fahrzeugs manövriert hat.

8. System nach einem der vorangehenden Ansprüche, dadurch gekennzeichnet, dass es ein Modulationssignalgenerator enthält, der mit mindestens einem Modulationstransistor (213, 214) gekuppelt wird, um die zu den Licht-ausstrahlenden Dioden (215, 216) und zum Schallzeug (226) gelieferten Signale zu modulieren.

9. System nach einem der vorangehenden Ansprüche, dadurch gekennzeichnet, dass es für die sichtliche Überwachung des Betriebs eine Schaltung (25) enthält, die von einem Lichtbeweis (257) gebildet wird, der mit dem Modulationssignalgenerator (24) durch insbesondere zwei parallel geschalteten Zweigen gekuppelt ist, wobei der eine Zweig ein Impulsumformer (251) mit einem UND Tor (253) in Reihenschaltung enthält und dieses Tor unter Abhängigkeit des in Wachstellung (V) Umschalter (23) durchlassend wird, und wobei der andere Zweig ein Impulsumformer (252) mit einem UND Tor (254) in Reihenschaltung enthält und dieses Tor (254) unter Abhängigkeit des in Alarmstellung (A) Umschalter (23) durchlassend wird, und wobei auch die Umformer (251, 252) eingestellt werden, um aus den von den Signalen vom Modulationssignalgenerator (24) Impulssignale von verschiedenen Impulsdauern zu bilden.

10. System nach den Ansprüchen 1 und 3, dadurch gekennzeichnet, dass der Impulsgenerator (10) mit einem Tor (101) angeschlossen ist, dass das zu den Sendern (1D, 1G) gelieferten Impulssignal sperrt, wobei dieses Tor durch eine Halterung-Schaltung (30) und einem ODER Tor (301), von einem Hand-Einschalter für die zeitliche Ausschaltung des Systems (302) einerseits, oder durch der Blinkgeber (40) des Fahrzeugs (VV) – wenn der Fahrzeugführer einen der Einschalter (401, 403) der blinkenden Anzeigelampen (402, 404) dieses Fahrzeugs manövriert – anderseits gesteuert wird.

11. System nach einem der vorangehenden Ansprüche, dadurch gekennzeichnet, dass der Lichtbeweis (257) der Schaltung (25) für die sichtliche Überwachung des Betriebs mit den zwei parallel geschalteten Zweigen – welche den Lichtbeweis (257) mit dem Modulationssignalgenerator (24) kuppeln – durch einem von der Halterung-Schaltung (30) kontrollierten Sperrtor (256) gekuppelt ist, wobei diese Halterung-Schaltung (30) selbst mit dem Blinkgeber (40) des Fahrzeugs (VV) und mit dem Hand-Einschalter für die zeitliche Ausschaltung des Systems (302) gekuppelt ist.

12. System nach einem der vorangehenden Ansprüche, dadurch gekennzeichnet, dass es ein Relais (228) enthält, deren Kontakte zur Verfügung des Fahrzeugsführers gelassen werden und das mit dem Schallzeug (226) in Reihenschaltung parallel geschaltet ist, wobei diese Schaltung ein unter Abhängigkeit vom Hand-Umschalter (23) in Alarmstellung durchlassendes UND Tor (227) ent-hält.

FIG1

C

VV

12G

AA

2

12D

L

FIG 2 A

VV

2D    1D        1G    2G

FIG 2 B

VV

2D    1D        1G    2G

C

# FIG 3

# FIG 4